# EUROPEAN PATENT SPECIFICATION

(11) **EP 2 708 138 B1**
(45) Date of publication and mention of the grant of the patent: **07.01.2015**
(21) Application number: 13182476.5
(22) Date of filing: 30.08.2013
(51) Int. Cl.: A22C 11/02

(54) **Twisting apparatus**
Verwindungsvorrichtung
Dispositif de torsion

(30) Priority: 14.09.2012 IT VR20120187
(43) Date of publication of application: 19.03.2014
(73) Proprietor: RISCO S.p.A., I-36016 Thiene (VI) (IT)
(72) Inventor: Righele, Giampietro, 36016 Thiene (VI) (IT); Toniello, Filippo, 36016 Thiene (VI) (IT)
(74) Representative: Manfrin, Marta

(56) References cited:
- US-A- 4 017 941
- US-A- 4 955 109
- US-A1- 2010 330 891

## Description

The present disclosure relates in general to the sector of twisting machines or apparatus intended, for example, to twist food products with a paste-like consistency such as minced meat, an emulsified product, a cold cut product or the like.

Even more particularly, the present disclosure relates to a twisting apparatus of the type including a filling cone or pipe which is mounted on a twisting apparatus. The filling cone has a free end on which a casing is positioned, so that the food product may be filled inside the casing. After positioning of the casing, the free end of the filling cone is adapted to be connected to a braking device which holds the casing and keeps it in a tensioned condition for allowing loading or filling of the food product in order to form an encased product. At regular intervals a twisting device causes rotation of the filling cone so as to perform twisting of the casing (held fast by the braking device) and division of the encased food product into segments or parts.

The present disclosure is based on the observation by the inventor of the present patent application that, in order to load the casing onto the free end of the filling cone, two different twisting systems have been proposed hitherto.

In a first twisting system, the filling cone has a telescopic structure. This filling cone, or filling assembly, is formed by several tubular bodies and is shortened with a variation in the internal volume. Owing to shortening it is possible to space the free end of the filling cone from the braking device and allow mounting of the casing on the free end of the filling cone. Such a system has been recognized as being inconvenient since, owing to the variation of the internal volume, significant and undesirable leakage of food product from the filling cone occurs.

A second system, which is able to overcome this drawback, includes an apparatus in which the filling cone is stationary and the braking device is mounted movably, namely displaceable with respect to the filling cone, in order to be able to access the free end of the filling cone during loading of the casing so as not to have to displace the filling cone.

This second twisting system, however, involves constructional complications in order to ensure the mobility of any other processing apparatus associated with the braking device, such as belt or chain systems for conveying the product output downstream of the braking system.

US patent 4955109 discloses a twisting apparatus comprising a loading device intended to load a food product in a casing and a braking device, wherein the loading device comprises a filling assembly and an inlet conduit for feeding the product to the filling assembly, wherein a feed path of the food product is defined in the filling assembly and wherein said filling assembly is intended to support the casing.

Based on these observations, in order to overcome the problem of the complexity and the poor productive efficiency of the known systems, a twisting apparatus such as that defined in the independent claim 1 is provided. Secondary characteristic features of the subject of the present disclosure are defined in the corresponding dependent claims.

In particular, according to certain aspects of the present disclosure, the twisting apparatus comprises an inlet conduit and a filling assembly having a passage duct, wherein the inlet conduit is intended to introduce the food product into the filling assembly. The inlet conduit is structurally separate from the passage duct. Moreover the filling assembly is adapted to assume at least a first operative position, in which the filling assembly is connected to the braking device and said inlet conduit is in fluid communication with said passage duct, and a second operative position in which the filling assembly is linearly displaced in a spaced relationship or detached from the braking device. In the second operative position, the passage duct closes or interrupts the fluid communication with the inlet conduit. In other words, in the twisting apparatus according to the present disclosure, the food product is intended to be loaded in a first part, which can coincide with the inlet conduit, and in a second part, which can coincide with the filling assembly. When it is required to load the casing on the loading assembly, only the loading assembly may be displaced with respect to the inlet conduit and communication interrupted with the inlet conduit, without causing variations in the internal volume. The first part and the second part can be therefore two parts structurally independent from each other.

Owing to the fact that the inlet conduit is structurally separate from the filling assembly, it is possible to displace only the filling assembly with respect to the inlet conduit, so as to cause a relatively limited overall displacement of the filling assembly alone and limit overall the dimensions of the twisting apparatus. For example, in order to optimize further the volumes and the overall dimensions of the twisting apparatus, the inlet conduit is located on one side, for example underneath, the filling assembly.

In certain embodiments of the present disclosure, the passage duct has a side wall and the inlet conduit is facing the side wall. In the first operative position, the inlet conduit is in fluid communication with an opening of the side wall and, in the second operative position, the side wall closes or interrupts the fluid communication with the inlet conduit. In other words, the side wall of the loading assembly serves as a shutter or for preventing the passage of food product and makes it possible to avoid leakage of food product from the twisting apparatus during loading of the casing. In other words, the passage duct has the dual function of a conduit for loading the food product and a shutter for the inlet conduit. Owing to closing of the inlet conduit, it is possible to prevent the food product from being exposed to air during loading of the casing.

Further advantages, characteristic features and the modes of use of the subject of the present disclosure will become clear from the following detailed description of a number preferred embodiments thereof, provided solely by way of a non-limiting example. It is clear, however, that each embodiment may have one or more of the advantages listed above; in any case it is not, however, required that each embodiment should have simultaneously all the advantages listed.

Reference shall be made to the figures in the accompanying drawings in which:
- Figure 1 shows a view from above of a twisting apparatus according to an embodiment of the present disclosure;
- Figures 2-4 shows views from above of a twisting apparatus according to an embodiment of the present disclosure in respective operative positions;
- Figure 5 shows an axonometric view of a twisting apparatus according to an embodiment of the present disclosure in a first operative position;
- Figure 6 shows an axonometric view of a twisting apparatus according to an embodiment of the present disclosure in a second operative position;
- Figure 7 shows a cross-sectional view along the line VII-VII of Figure 2;
- Figure 8 shows a cross-sectional view along the line VIII-VIII of Figure 3.

With reference to the accompanying figures, the reference number 10 denotes a twisting apparatus according to the present disclosure.

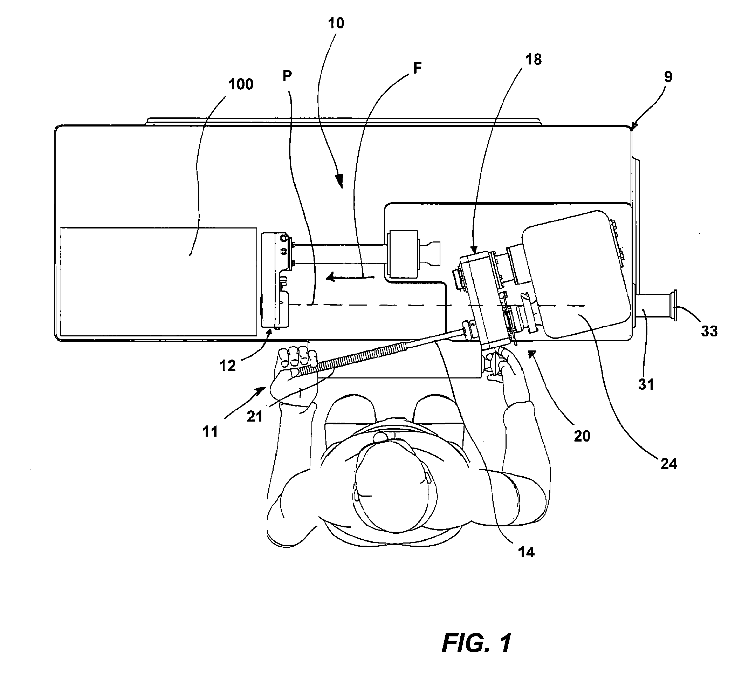

The twisting apparatus 10 comprises a frame 9, or support structure, and a loading device 20 for a food product, mounted on the frame 9. The food product is not shown in the drawings and may be, for example, a product based on minced meat or otherwise, or a product in the form of a paste, intended to be loaded or filled inside a casing 21. The casing 21 is schematically shown in Figure 1 in the curled-up condition.

The twisting apparatus 10 may be associated, on one side, with a filling machine which feeds the product towards the twisting apparatus 10. On another side, the twisting apparatus 10 may be associated with a processing apparatus 100, where the food product is filled inside a casing 21 so as to form an "encased" food product. The processing apparatus 100 may have any form and function and does not form part of the present disclosure.

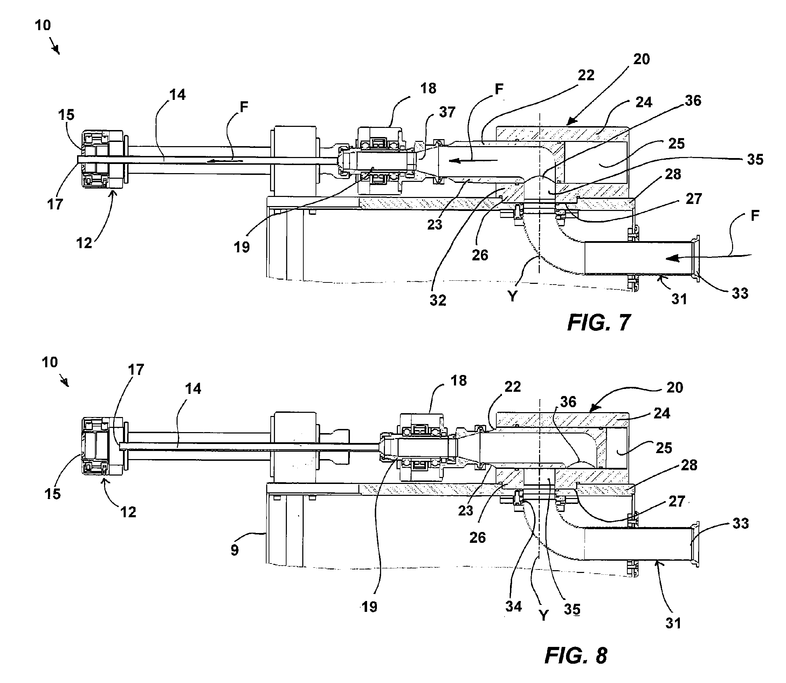

The food product, which is supplied from the filling machine and reaches the processing apparatus 100 passing through the twisting apparatus 10, defines a loading path P for the food product, which is in the direction of advancing movement of the food product. The direction of advancing movement is indicated by the arrow F in Figure 1 and in Figure 7. In connection with the present disclosure, each spatial reference, such as "alongside", "on one side", "upstream", "downstream", "horizontal" or "vertical", "above" or "below", "bottom", "retracted" or "advanced", or similar spatial references, are to be understood as referring by way of example to the twisting apparatus as arranged in Figures 1 and 7, when in operation, where the loading path P and the direction of advancing movement of the food product may be identified.

The loading device 20 includes a filling assembly 11 intended to support the casing 21 and an inlet conduit 31 for feeding the food product into the filling assembly 11. The filling assembly 11 includes a filling cone 14 on which the casing 21 is placed in a curled-up condition and a passage duct 22 arranged between the filling assembly 14 and the inlet conduit 31.

The filling cone or pipe 14 is a pipe extending along a longitudinal axis X which, during operation, is coaxial with at least a portion of the loading path P, for filling the food product inside the casing 21. In a normal and conventional operative condition, the longitudinal axis X is a horizontal axis. The passage duct 22 is, as mentioned, situated upstream of the filling cone 14 and places the inlet conduit 31 in fluid communication with the filling cone 14.

It can also be seen that, in an embodiment of the present disclosure, such as that shown in the figures, the filling cone 14 is mounted on a twisting device 18 which allows the filling cone 14 to rotate about its longitudinal axis X so as to perform twisting of the casing 21 when the casing 21 is mounted on a free end 13 of the filling cone 14.

The twisting device 18 is of the type known in the sector and comprises a rotating actuating member connected by means of a belt or similar movement transmission device for transmitting a transmission movement to the filling cone 14. The filling cone 14 is in particular fixed to a tubular body 19 of the twisting device 18 which is connected to the actuating member. The food product is intended to pass inside the tubular body 19.

The twisting apparatus 10 also comprises a braking device 12 of the type known to a person skilled in the art, which is connected to the loading device 20 by means of a rigid arm 16. The braking device 12 is provided with a bush 15, called brake, adapted to hold fast the casing 21 and produce a tension necessary for optimum filling of the product inside the said casing 21. The braking device 12 is provided with an opening 13 for receiving the free end portion 17 of the filling cone 14. The connection between the loading device 20 and the braking device 12 via the arm 16 is also of the type known to a person skilled in the art.

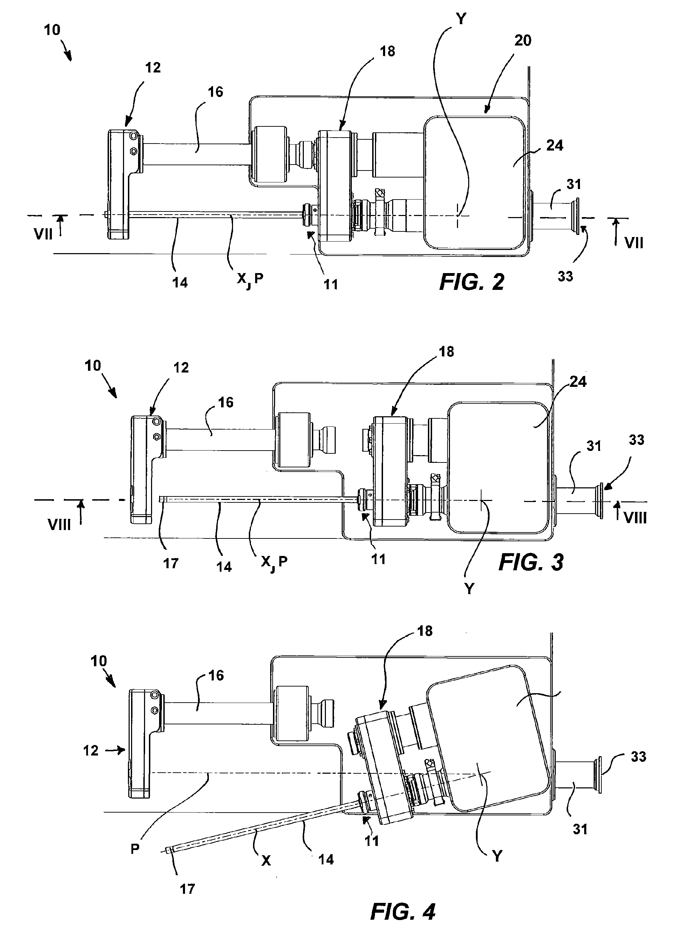

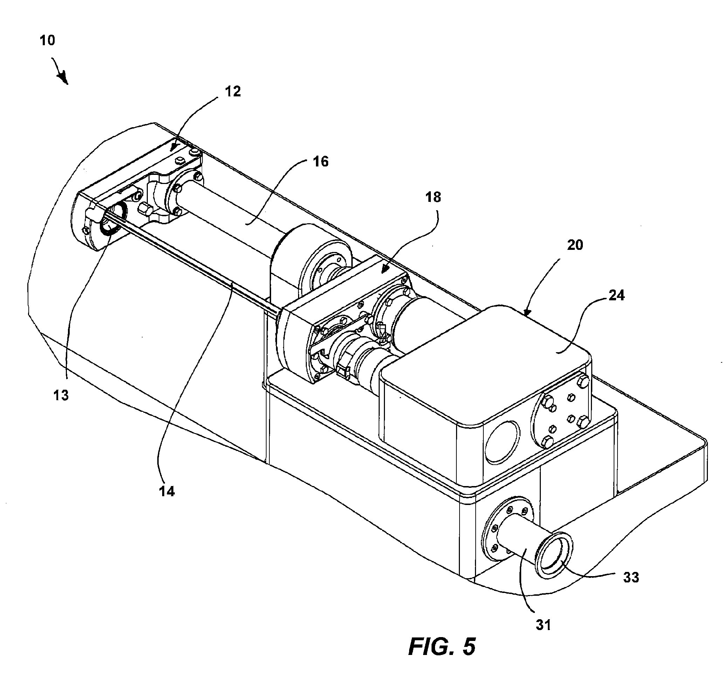

According to an aspect of the present disclosure, the filling assembly 11 may assume at least two, and optionally three, operative positions different from each other. By way of example, a first loading operative position is visible in Figure 2, Figure 5 and Figure 7 and corresponds to a position in which the food product is loaded into the casing 21. In this first operative position, the filling cone 14 is arranged along the loading path P and has a respective free end portion 17 which is housed inside the opening 13 of the braking device 12.

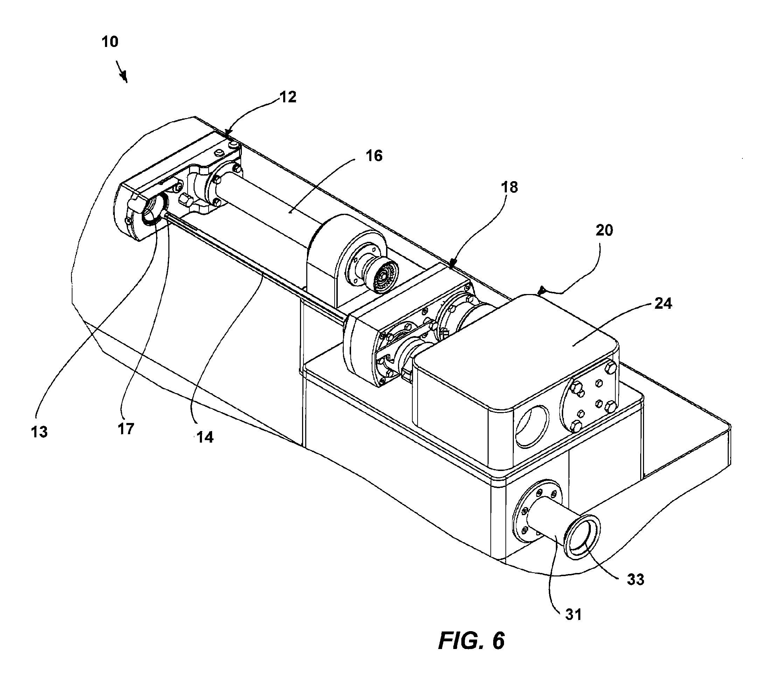

A second operative position is visible, by way of example, in Figure 3, Figure 6 and Figure 8 and corresponds to a position in which the aforementioned free end portion 17 of the filling cone 14 is spaced from the braking device 12. In this operative condition, the casing 21 may be mounted on the filling cone 14, without interfering with the braking device 12. In this second operative position, the filling cone 14 has its respective free end portion 17 spaced from the opening 13 of the braking device 12. More particularly, in this second operative position, the filling cone 14 is axially aligned with the opening 13 of the braking device 12 in a position which is linearly retracted with respect to the first operative position, towards an upstream zone of the braking device 12.

In particular it can be seen that the entire filling assembly 11 is displaced from the first operative position to the second operative position and vice versa. Even more particularly, in accordance with certain aspects of the present disclosure, with reference to Figures 7 and 8, the inlet conduit 31 is structurally separate from said passage duct 22 and is situated on one side of said passage duct 22 so that, when the filling assembly 11 is in the first operative position, the inlet conduit 31 is in fluid communication with said passage duct 22 and, when the filling assembly 11 is in the second operative position, the passage duct 22 closes or interrupts the fluid communication with the inlet conduit 31 so as to act as a fluid communication interruptor.

In accordance with an embodiment such as that visible in the figures, the passage duct 22 has a side wall 23 and the inlet conduit is facing said side wall 23. In the first operative position, the inlet conduit 31 is in fluid communication with an opening of the side wall 23 and, in said second operative position, the side wall 23 closes or interrupts the fluid communication with the inlet conduit 31. For example, when the filling assembly 11 is in the first operative position, an inlet mouth 36 of the passage duct 22 is axial alignment with an output mouth 34 of the inlet conduit 21. According to an embodiment of the present disclosure, such as that visible in the accompanying figures, the loading device 20 comprises, in addition to the twisting device 18 and the passage duct 22, a case-shaped support structure 24 which is adapted to support the passage duct 22.

The support structure 24 comprises an internal cavity 25 which is adapted to receive the passage duct 22 when the filling assembly 11 is in the second operative position. In particular, the passage duct 22, in the second operative position, occupies a free zone (cavity 25) inside the support structure 24 so as not to occupy additional spaces and allow the maximum dimensions of the entire twisting apparatus 10 to be limited.

Moreover, the cavity 25 is intended to receive any remains of food product leakage from the ducts so as to reduce to a minimum the risk of soiling a zone around the twisting apparatus 10. It is possible furthermore to prevent the food product from being exposed to air.

Moreover, according to certain aspects of the present disclosure, the filling assembly 11 is displaced, substantially in a rigid manner, without performing any modifications or variations to the internal volume of the filling cone 14 and the passage duct 22. In other words, the filling assembly 11 is displaced as though it were single body between the operative positions. In fact, the filling cone 14 is adapted to be displaced from the first position to the second position and vice versa, together with the passage duct 22 and the tubular duct 19, keeping an internal volume unvaried when passing from one position to the other.

Consequently, in order to load the casing 21 on the filling cone 14, the filling cone 14 may be displaced in practical manner, thereby facilitating the operations for an operator. At the same time, owing to the fact that the internal volume is kept unvaried, there is no leakage of food product from the filling cone 14. More particularly, from a structural point of view, in order to allow this rigid displacement of the filling assembly, the passage duct 22 is fixed to the twisting device 18 and to the tubular body 19 defined above so as to allow the introduction of the product into the tubular body 19 and then into filling cone 14. The passage duct 22 is in particular connected to the twisting device 10 and to the tubular body 19 so as to be able to translate integrally and rigidly with the twisting device 18 and the tubular body 19. At the same time the tubular body 19 is connected idle to the passage duct 22 so that a rotation about the longitudinal axis X of the tubular body 19 is not transmitted to the passage duct 22.

Consequently, the passage duct 22 is translatable integrally with the filling cone 14 and with the entire twisting apparatus, in a linear and retractable manner, inside an cavity 25 of the support structure 24. This linear displacement or translation allows freeing of the end 17 of the filling cone 14 which is inserted inside the opening 13 of the braking device 12 and allows easy loading of the casing on said end 17 by an operator. In particular, in the embodiment shown the passage duct 22 is a tubular body and also the cavity 25 is substantially tubular.

According to an embodiment of the present disclosure, such as that visible in the accompanying figures, the inlet conduit 31 engages from below with respect to the support structure 24 so that product may be introduced from below into the passage duct 22.

In particular, the inlet conduit 31 is positioned below a base 28 and is in communication with the cavity 25 of the support structure 24. Even more particularly, the inlet conduit 31 engages with the support structure 24 in the region of a perpendicular axis Y (loading axis). In this connection it is pointed out that the bottom wall 32 of the support structure 24 has an opening 35 for placing the passage duct 22 in communication with the inlet conduit 31.

According to an embodiment of the present disclosure, such as that visible in the accompanying figures, the inlet conduit 31 is elbow-shaped with an inlet mouth 33 having a substantially horizontal axis and an output mouth 34 having a substantially vertical axis. The passage duct 22 is also elbow-shaped with an input mouth 36 having a substantially vertical axis and output mouth 37 having a substantially horizontal axis.

The inlet mouth 36 of the passage duct 22 and the output mouth 34 of the inlet conduit 31 are located in axial alignment with each other and so as to communicate with each other, via the aforementioned opening 35, when the filling cone 14 is located in at least one operative position and, in particular, for example, when the filling cone 14 is located in the first operative position.

Consequently, as can be seen from the drawings, in an embodiment such as that shown in the figures, the inlet conduit 31 and the passage duct 22, when connected together, define a channel for the passage of the food product from the filling device to the processing apparatus 11, wherein the channel for passage of the food product from the filling machine is at least partially sinusoidal-shaped.

Owing to the introduction, from below, of the food product into the passage duct 22 it is possible to obtain a twisting apparatus 10 in which the inlet mouth 33 is situated below. This position of the inlet mouth 33 is fully compatible for connection with a filling machine.

According to an embodiment of the present disclosure such as that which can be seen in the accompanying figures, a third operative position is also envisaged, as can be seen in Figure 1 and Figure 4, where the filling cone 14 is displaced laterally towards an operator, and the casing 21 may be mounted on the filling cone 14, substantially outside the volume or general shape of the twisting apparatus 10. In this third operative position, the filling cone 14 has a respective free end portion 17 in a spaced relationship from the opening 13 of the braking device 12. More particularly, in this third operative position, the filling cone 14 is angularly displaced, or out of axial alignment, with respect to the opening 13 of the braking device 12, in a position which is retracted with respect to the first operative position and angularly displaced in a lateral direction, with respect to the path P. The angled position or third (laterally displaced) operative position may allow an operator to perform operations outside of the volume of the twisting apparatus 10, so as to avoid having to work in a restricted spaced between the components of the twisting apparatus 10.

Moreover no displacement of the braking device 12 is required.

Even more particularly, the filling cone 14 can be displaced together with the twisting apparatus 18, the passage duct 22 and the support structure 24 from the second position to the third position and vice versa, namely can be displaced from a position aligned with the braking device 12 into a position angularly displaced with respect to the braking device 12. Even more particularly, the support structure 24 has a pivot portion 26 projecting downwards from a bottom wall 32 and arranged so as to be rotatable in a rotational seat 27 of a support base 28 of the frame 9. In other words, the support structure 24 is mounted rotatably about this axis Y. A rotation of the support structure 24 about the axis Y causes, as mentioned, an angular displacement of the filling cone 14, the twisting device 18 and the passage duct 22 from the second position to the third position. Such an angular displacement is visible in Figure 4. It can be seen that, in the third operative position, the assembly formed by the filling cone 14, twisting device 18 and passage duct 22 allows the volume of the entire twisting apparatus 10 to be kept substantially constant and moreover does not require disassembly of any of the components of the twisting apparatus 10 with respect to the frame 9.

In other words, according to certain aspects of the present disclosure, the loading path P envisages at least one first portion, coinciding with the loading axis X of the filling cone 14, namely coinciding with the first operative position of the filling cone 14, and at least one second portion, different from the first portion, where the second portion forms an angle with the first portion and is coaxial with the axis of rotation Y. Consequently the filling cone 14 is adapted to rotate about an axis coinciding with at least one portion (second portion) of the loading path P.

This configuration allows further compaction of the parts and limitation of the spaces and volumes of the twisting apparatus 10 as a whole. In fact, a rotation about the loading axis allows displacement of a limited number of parts or components for lateral displacement of the filling cone 14, by making use of the components or parts of the apparatus intended to form a loading path for the product. Moreover, as a result of this configuration, it is possible to obtain a twisting apparatus which is very compact, despite being able to assume a plurality of operative positions. Consequently, it is possible to rotate the entire loading device 20, including the twisting device 18, about the axis Y, namely about the loading axis or axis of engagement of the inlet conduit 31 inside the cavity 25 of the support structure 24. As already mentioned above, the possibility of rotating the entire loading device 20 about the axis Y offers the advantage of being able to displace laterally the filling cone 14, for example towards an operator, and also facilitating positioning of the casing on the filling cone 14, this manoeuvre being performed by means of a simple lateral rotation, with a reduced volume and reduced displacement of parts, while ensuring a high degree of compactness of the twisting apparatus 10.

It may also be noted that the inlet conduit 31 and the passage duct 22 have a respective vertical portion which is in axial alignment with the loading axis Y, namely the vertical rotational axis or pivot axis described above. Basically, as can be seen from Figures 7 and 8, the inlet conduit 31 and the passage duct 22 have a respective vertical portion which is coaxial with the pivot portion 26 of the support structure 24. Consequently the support structure 24 is rotated from the second operative position to the third operative position, rotating about the same loading axis Y along which the product is introduced from below.

A mode of operation of the twisting apparatus 10 may be substantially as described below.

Initially, in order to load a casing on the free end 17 of the filling cone 14 (in this condition the filling machine is set to the pause condition), the filling cone 14 and the passage duct 22 are displaced linearly inside the support structure 24. In this way, owing to the layout of the parts described above, the inlet mouth 36 of the passage duct 22 is not aligned with the loading axis X, and the side wall 23 of the passage duct 22 closes the opening 35, without causing variations in the internal volume of the entire path of the food product.

Thereafter, the entire loading device 20 is angularly rotated about the loading axis X so as to move the filling cone 14 into the vicinity of the operator who is situated on one side of the twisting system 10. In this way, the free end 17 can be accessed by the operator in order to perform the operations for insertion of the casing 21, and at the same time, the operator may operate the filling cone 14 without placing his/her hands directly inside the twisting apparatus 10. After loading the casing 21, the entire loading device 20 is positioned again in its original position (first operative position) with the filling cone 14 aligned and inserted inside the respective opening 13 of the braking device 12. In this condition, the braking device 12 stably retains the casing 21 on the filling cone 14 so as to ensure the necessary tension for optimum filling of the casing.

Then the filling machine is started and the food product is introduced via the inlet conduit 31 so as to be introduced through the filling cone 14 into the casing 21. At periodic intervals or continuously the twisting device 18 is activated and causes rotation of the filling cone 14 so as to perform momentary twisting of the casing 21 once the required amount of product has been filled inside the casing.

The subject of the present disclosure has been described hitherto with reference to preferred embodiments thereof. It is understood that other embodiments relating to the same inventive idea may exist, all of these falling within the scope of protection of the claims which are appended hereinbelow.

## Claims

1. Twisting apparatus (10) comprising a loading device (20) intended to load a food product in a casing (21) and a braking device (12), wherein the loading device (20) comprises a filling assembly (11) and an inlet conduit (31) for feeding the product into the filling assembly (11), wherein a feed path of the food product is defined in the filling assembly (11) and wherein said filling assembly (11) is intended to support the casing (21);
wherein
- the filling assembly (11) includes a passage duct (22),
- the inlet conduit (31) is structurally separate from said passage duct (22), and
- the filling assembly (11) is adapted to assume at least a first operative position in which the filling assembly (11) is connected to the braking device (12) and said inlet conduit (31) is in fluid communication with said passage duct (22), and a second operative position in which the filling assembly (11) is linearly displaced in a spaced relationship or detached from the braking device (12), and wherein, in said second operative position, the passage duct (22) closes or interrupts the fluid communication with the inlet conduit (31), and serves as a shutter for said feed path of the food product.

2. Twisting apparatus (10) according to claim 1, wherein, the passage duct (22) has a side wall (23), and said inlet conduit is placed on one side of the passage duct (22) facing said side wall (23) and wherein, in said first operative position, said inlet conduit (31) is in fluid communication with an opening (36) of the side wall (23) and wherein, in said second operative position, the side wall (23) closes or interrupts the fluid communication with the inlet conduit (31).

3. Twisting apparatus (10) according to claim 1 or 2, wherein, when the filling assembly (11) is in the first operative position, an inlet mouth (36) of the passage duct (22) is aligned axially with an output mouth (34) of the inlet conduit (31).

4. Twisting apparatus (10) according to claim 3, wherein said filling assembly (11) is mounted rotatably about an axis of rotation (Y) and said filling assembly (11) is adapted to be rotated about said axis of rotation (Y) when said filling assembly (11) is in said second operative position.

5. Twisting apparatus (10) according to any one of the preceding claims, wherein the inlet conduit (31) is elbow-shaped and has an inlet mouth (33) with a horizontal axis and an output mouth (34) with a vertical axis, said output mouth (34) being adapted to be placed in communication with the passage duct (22).

6. Twisting apparatus (10) according to any one of the preceding claims, wherein the inlet conduit (31) is placed below the passage duct (22).

7. Twisting apparatus (10) according to any one of the preceding claims, wherein the loading device (20) comprises a support structure (24) for supporting the filling assembly (11), wherein the support structure (24) includes a casing body defining an internal cavity (25), and wherein, in said second operative position, the passage duct (22) is at least partially housed in said internal cavity (25), said support structure (24) being stationary both in said first operative position and in said second operative position.

8. Twisting apparatus (10) according to claim 7, wherein the inlet conduit (31) is in communication with the internal cavity (25) of the support structure (24) and engages with the support structure (24) in the region of a respective opening (35) of the support structure (24).

9. Twisting apparatus (10) according to claim 8, wherein, in said second position, the side wall (23) of said passage duct (22) closes the opening (35) of the support structure (24).

10. Apparatus according to claim 7, 8 or 9, wherein the support structure (24) includes a pivot portion (26), said pivot portion (26) being arranged rotatable in a rotational seat (27) of a support base (28) and being coaxial with an output mouth (34) of said inlet conduit (31).

11. Apparatus according to claims 3 and 10, wherein said rotational seat (27) is coaxial with said inlet mouth (36) and said output mouth (34) of the inlet conduit (31), when the filling assembly (11) is in the first operative position.

12. Twisting apparatus (10) according to any one of the preceding claims, wherein the filling assembly (11) includes a filling cone (14) intended to support the casing (21), and a twisting device (18) arranged between the filling cone (14) and the passage duct, and able to rotate the filling cone (14), the filling cone (14) being connected idle to the passage duct (22) such that the filling cone translates together with the passage duct (22) and a rotation about an axis of the filling cone (14) is not transmitted to the passage duct (22).

## Patentansprüche

1. Verdrillvorrichtung, umfassend eine Ladeeinrichtung (20), die ausgebildet ist, um ein Nahrungsmittel einer Hülle (21) zuzuführen und eine Bremseinrichtung (12), wobei die Ladeeinrichtung (20) eine Füllbaugruppe (11) und einen Einlasskanal (31) zum Zuführen des Produkts in die Füllbaugruppe (11) umfasst, wobei ein Zuführpfad des Nahrungsmittelprodukts in der Füllbaugruppe (11) definiert ist und wobei die Füllbaugruppe (11) ausgebildet ist, um die Hülle (21) zu stützen;
wobei
- die Füllbaugruppe (11) einen Durchgangskanal (22) beinhaltet,
- der Einlasskanal (31) strukturell von dem Durchgangskanal (22) getrennt ist, und
- die Füllbaugruppe (11) ausgebildet ist, um zumindest eine erste Betriebsstellung einzunehmen, in der die Füllbaugruppe (11) mit der Bremseinrichtung (12) verbunden ist und der Einlasskanal (31) fluidisch kommunizierend mit dem Durchgangskanal (22) verbunden ist, und eine zweite Betriebsstellung, in der die Füllbaugruppe (11) linear versetzt in einem beabstandeten Verhältnis oder losgelöst von der Bremseinrichtung (12) ist, und wobei, in der zweiten Betriebsstellung der Durchgangskanal (22) die fluidisch kommunizierende Verbindung mit dem Einlasskanal (31) verschließt oder unterbricht und als ein Verschluss für den Zuführpfad des Nahrungsmittelprodukts dient.

2. Verdrillvorrichtung gemäß Anspruch 1, wobei der Durchgangskanal (22) eine Seitenwandung (23) aufweist und der Einlasskanal an einer Seite des Durchgangskanals (22) gegenüberliegend der Seitenwandung (23) angeordnet ist und wobei in dieser ersten Betriebsstellung der Einlasskanal (31) fluidisch kommunizierend mit einer Öffnung (36) der Seitenwandung (23) verbunden ist und wobei in der zweiten Betriebsstellung die Seitenwandung (23) die fluidisch kommunizierende Verbindung mit dem Einlasskanal (31) verschließt oder unterbricht.

3. Verdrillvorrichtung gemäß Anspruch 1 oder 2, wobei, wenn die Füllbaugruppe in der ersten Betriebsstellung ist, eine Einlassmündung (36) des Durchgangskanals (22) axial fluchtend mit einer Auslassmündung (34) des Einlasskanals (31) angeordnet ist.

4. Verdrillvorrichtung gemäß Anspruch 3, wobei die Füllbaugruppe (11) drehbar bezüglich einer Drehachse (Y) befestigt ist und die Füllbaugruppe (11) ausgebildet ist, um um die Drehachse (Y) zu drehen, wenn die Füllbaugruppe (11) in der zweiten Betriebsstellung ist.

5. Verdrillvorrichtung gemäß einem der vorstehenden Ansprüche, wobei der Einlasskanal (31) ellbogenförmig ausgebildet ist und eine Einlassmündung (33) aufweist mit einer horizontalen Achse und einer Auslassmündung (34) mit einer vertikalen Achse, wobei die Auslassmündung (34) ausgebildet ist, um kommunizierend mit dem Durchgangskanal (22) angeordnet zu werden.

6. Verdrillvorrichtung gemäß einem der vorhergehenden Ansprüche, wobei der Einlasskanal (31) unterhalb des Durchgangskanals (22) angeordnet ist.

7. Verdrillvorrichtung gemäß einem der vorstehenden Ansprüche, wobei die Ladeeinrichtung (20) eine Stützstruktur (24) zum Stützen der Füllbaugruppe (11) umfasst, wobei die Stützstruktur (24) einen Gehäusekörper beinhaltet, der eine interne Ausnehmung (25) definiert und wobei in der zweiten Betriebsstellung der Durchgangskanal (22) zumindest teilweise in der internen Ausnehmung (25) aufgenommen ist, und die Stützstruktur (24) sowohl in der ersten Betriebsstellung als auch in der zweiten Betriebsstellung stationär ist.

8. Verdrillvorrichtung gemäß Anspruch 7, wobei der Einlasskanal (31) kommunizierend mit der internen Ausnehmung (25) der Stützstruktur (24) verbunden ist und in Wirkverbindung mit der Stützstruktur (24) im Bereich einer entsprechenden Öffnung (35) der Stützstruktur (24) steht.

9. Verdrillvorrichtung gemäß Anspruch 8, wobei in der zweiten Betriebsstellung die Seitenwandung (23) des Durchgangskanals (22) die Öffnung (35) der Stützstruktur (24) verschließt.

10. Vorrichtung gemäß Anspruch 7, 8 oder 9, wobei die Stützstruktur (24) einen Drehabschnitt (26) beinhaltet, und der Drehabschnitt (26) drehbar in einem Drehsitz (27) einer Stützbasis (28) und koaxial mit einer Auslassmündung (34) des Einlasskanals (31) angeordnet ist.

11. Vorrichtung gemäß Anspruch 3 und 10, wobei der Drehsitz (27) koaxial mit der Einlassmündung (36) und der Auslassmündung (34) des Einlasskanals (31) angeordnet ist, wenn die Füllbaugruppe (11) in der ersten Betriebsstellung ist.

12. Verdrillvorrichtung gemäß einem der vorhergehenden Ansprüche, wobei die Füllbaugruppe (11) einen Füllkonus (14) beinhaltet zum Stützen der Hülle (21) und eine Verdrilleinrichtung (18) zwischen dem Füllkonus (14) und dem Durchgangskanal angeordnet ist und die ausgebildet ist, den Füllkonus (14) zu drehen, wobei der Füllkonus (14) freilaufend mit dem Durchgangskanal (22) derart verbunden ist, dass der Füllkonus sich gemeinsam mit dem Durchgangskanal (22) verschiebt und eine Drehung um eine Achse des Füllkonus (14) nicht auf den Durchgangskanal (22) übertragen wird.

## Revendications

1. Appareil de torsion (10) comprenant un dispositif de chargement (20) prévu pour charger un produit alimentaire dans un boyau (21) et un dispositif de freinage (12), dans lequel le dispositif de chargement (20) comprend un ensemble de remplissage (11) et un conduit d'entrée (31) pour amener le produit dans l'ensemble de remplissage (11), dans lequel une trajectoire d'alimentation du produit alimentaire est définie dans l'ensemble de remplissage (11) et dans lequel ledit ensemble de remplissage (11) est prévu pour supporter le boyau (21) ;
dans lequel :
l'ensemble de remplissage (11) comprend une conduite de passage (22),
le conduit d'entrée (31) est structurellement séparé de ladite conduite de passage (22), et
l'ensemble de remplissage (11) est adapté pour adopter au moins une première position opérationnelle dans laquelle l'ensemble de remplissage (11) est raccordé au dispositif de freinage (12) et ledit conduit d'entrée (31) est en communication de fluide avec ladite conduite de passage (22) et une seconde position opérationnelle dans laquelle l'ensemble de remplissage (11) est linéairement déplacé en relation espacée, ou détaché du dispositif de freinage (12), et dans lequel, dans ladite seconde position opérationnelle, la conduite de passage (22) se ferme ou interrompt la communication de fluide avec le conduit d'entrée (31) et sert d'obturateur pour ladite trajectoire d'alimentation du produit alimentaire.

2. Appareil de torsion (10) selon la revendication 1, dans lequel la conduite de passage (22) a une paroi latérale (23) et ledit conduit d'entrée est placé d'un côté de la conduite de passage (22) faisant face à ladite paroi latérale (23) et dans lequel, dans ladite première position opérationnelle, ledit conduit d'entrée (31) est en communication de fluide avec une ouverture (36) de la paroi latérale (23) et dans lequel, dans ladite seconde position opérationnelle, la paroi latérale (23) ferme ou interrompt la communication de fluide avec le conduit d'entrée (31).

3. Appareil de torsion (10) selon la revendication 1 ou 2, dans lequel, lorsque l'ensemble de remplissage (11) est dans la première position opérationnelle, une bouche d'entrée (36) de la conduite de passage (22) est alignée axialement avec une bouche de sortie (34) du conduit d'entrée (31).

4. Appareil de torsion (10) selon la revendication 3, dans lequel ledit ensemble de remplissage (11) est monté de manière rotative autour d'un axe de rotation (Y) et ledit ensemble de remplissage (11) est adapté pour être entraîné en rotation autour dudit axe de rotation (Y) lorsque ledit ensemble de remplissage (11) est dans ladite seconde position opérationnelle.

5. Appareil de torsion (10) selon l'une quelconque des revendications précédentes, dans lequel le conduit d'entrée (31) est en forme de coude et a une bouche d'entrée (33) avec un axe horizontal et une bouche de sortie (34) avec un axe vertical, ladite bouche de sortie (34) étant adaptée pour être placée en communication avec la conduite de passage (22).

6. Appareil de torsion (10) selon l'une quelconque des revendications précédentes, dans lequel le conduit d'entrée (31) est placé au-dessous de la conduite de passage (22).

7. Appareil de torsion (10) selon l'une quelconque des revendications précédentes, dans lequel le dispositif de chargement (20) comprend une structure de support (24) pour supporter l'ensemble de remplissage (11), dans lequel la structure de support (24) comprend un corps de boyau définissant une cavité interne (25) et dans lequel, dans ladite seconde position opérationnelle, la conduite de passage (22) est au moins partiellement logée dans ladite cavité interne (25), ladite structure de support (24) étant fixe à la fois dans ladite première position opérationnelle et dans ladite seconde position opérationnelle.

8. Appareil de torsion (10) selon la revendication 7, dans lequel le conduit d'entrée (31) est en communication avec la cavité interne (25) de la structure de support (24) et se met en prise avec la structure de support (24) dans la région d'une ouverture (35) respective de la structure de support (24).

9. Appareil de torsion (10) selon la revendication 8, dans lequel, dans ladite seconde position, la paroi latérale (23) de ladite conduite de passage (22) ferme l'ouverture (35) de la structure de support (24).

10. Appareil selon la revendication 7, 8 ou 9, dans lequel la structure de support (24) comprend une partie de pivot (26), ladite partie de pivot (26) étant agencée de manière rotative dans un siège de rotation (27) d'une base de support (28) et étant coaxiale avec une bouche de sortie (34) dudit conduit d'entrée (31).

11. Appareil selon les revendications 3 et 10, dans lequel ledit siège de rotation (27) est coaxial avec ladite bouche d'entrée (36) et ladite bouche de sortie (34) du conduit d'entrée (31), lorsque l'ensemble de remplissage (11) est dans la première position opérationnelle.

12. Appareil de torsion (10) selon l'une quelconque des revendications précédentes, dans lequel l'ensemble de remplissage (11) comprend un cône de remplissage (14) prévu pour supporter le boyau (21) et un dispositif de torsion (18) agencé entre le cône de remplissage (14) et la conduite de passage et pouvant faire tourner le cône de remplissage (14), le cône de remplissage (14) étant raccordé, à l'arrêt, à la conduite de passage (22) de sorte que le cône de remplissage effectue un mouvement de translation conjointement avec la conduite de passage (22) et une rotation autour d'un axe du cône de remplissage (14) n'est pas transmise à la conduite de passage (22).
